# EUROPEAN PATENT SPECIFICATION

(11) **EP 1 957 869 B1**
(45) Date of publication and mention of the grant of the patent: **06.06.2012**
(21) Application number: 06807715.5
(22) Date of filing: 02.11.2006
(51) Int. Cl.: F23N 5/02, F24H 9/20, F24F 11/00, G05D 23/19

(54) **SYSTEM FOR CONTROLLING AN ENVIRONMENT HEATING APPARATUS**
SYSTEM ZUR STEUERUNG EINER UMGEBUNGSHEIZVORRICHTUNG
SYSTÈME DE COMMANDE D'APPAREIL DE CHAUFFAGE AMBIANT

(30) Priority: 04.11.2005 IT MI20052092
(43) Date of publication of application: 20.08.2008
(73) Proprietor: Tecno COVER Srl, 36010 Zané (IT)
(72) Inventor: Verlato, Lorenzo, 36010 Zane (IT)
(74) Representative: Borsano, Corrado
(86) International application number: PCT/EP2006/068037
(87) International publication number: WO 2007/051821

(56) References cited:
- US-A- 4 421 268
- US-A- 5 590 642
- US-A- 6 039 261

## Description

The present invention relates to a system for the control and management of an environment heating apparatus, and more precisely to a system for controlling and managing an environment heating apparatus which incorporates an electronic control unit.

### State of the art

To date, it is know the use of heating apparatuses, such as solid fuel heaters, liquid fuel heaters, fireplace boilers and the like, for the heating of both domestic and medium-sized public environments (See for example patent document US-A-4421268) .

The abovementioned heating apparatuses comprise an household appliance consisting essentially of a main body which encloses the fuel combustion chamber, a tank containing the fuel, means for supplying the fuel from the tank to the combustion chamber and means for extracting the exhaust fumes. In particular structural solutions of such household appliances, forced convection means for conveying the fluid to be heated, and output the latter into the environment to be heated and, in some cases, for cooling the body of the household appliance are also provided.

For example, in the case of a solid fuel heater such as a pellet heater, the main components include a tank containing the pellets used as fuel, a supply motor for loading the pellets into the combustion chamber, a motor connected to a fan for expelling the exhaust fumes, and a motor connected to a fan for ventilating the warm air into the environment to be heated (in addition to the cooling of the body of the heater itself).

For the operation of the aforementioned motors, an electronic device comprising a board is typically comprised which, according to the method of the state of the art for managing the household appliance, contemplates the combustion control by means of a so-called "stepped functioning" logic. More precisely, according to this management method of the state of the art, operating stepped values are fixed for each motor and according to the user's request. Therefore, according to the "step" selected by the user, at lower functioning the heater loads few fuel and exhaust fume ventilation is slow, while at higher functioning such operating values increase.

However, a drawback of such management method is related to the impossibility of regulating devices or motors in real time during operation of the apparatus. More precisely, since to the user there is provided a "stepped adjustment" of all the drives themselves, a fine-tuning of the latter it is not possible and according to needs. For example, if the heating energy needs to be decreased, the user can only shift to the lower operating gear, which in some cases does not correspond to the actual operating conditions required by the user, i.e. either too cool or still too hot.

Furthermore, there is another drawback in such "stepped" method, consisting of when a change of the fuel type/features arises, i.e. the type of available fuel, a total reset of said drives or motors of the system is needed, in order to ensure correct operation of the heater. This entails an intervention by a specialised technician, as well as further increase of costs and apparatus restoring times.

A further drawback of the aforementioned management stepped method consists of the operating of the same is essentially manual, therefore it's up to the user the decision of how to manage the drives/motors by manually selecting the operating level or steps.

### Summary of the Invention

Therefore, the object of the present invention is to solve the aforementioned drawbacks by providing a system for controlling and managing of an environment heating apparatus which is totally automated according to pre-set parameters by the user.

Another object of the present invention is to provide a system for managing and controlling an environment heating apparatus which allows the fully automatic continuous adjustment of drives and motors of the apparatus according to detected values and values pre-set by the user.

It is a further object of the present invention to provide a system for managing and controlling an environment heating apparatus which allows operation of the aforementioned heating apparatus at a maximum efficiency and also at low rates, and in a fully automated manner.

Therefore, the present invention provides a system for managing and controlling an environment heating apparatus according to claim 1 and a method for controlling such apparatus according to claim 5.

### Description of the drawings

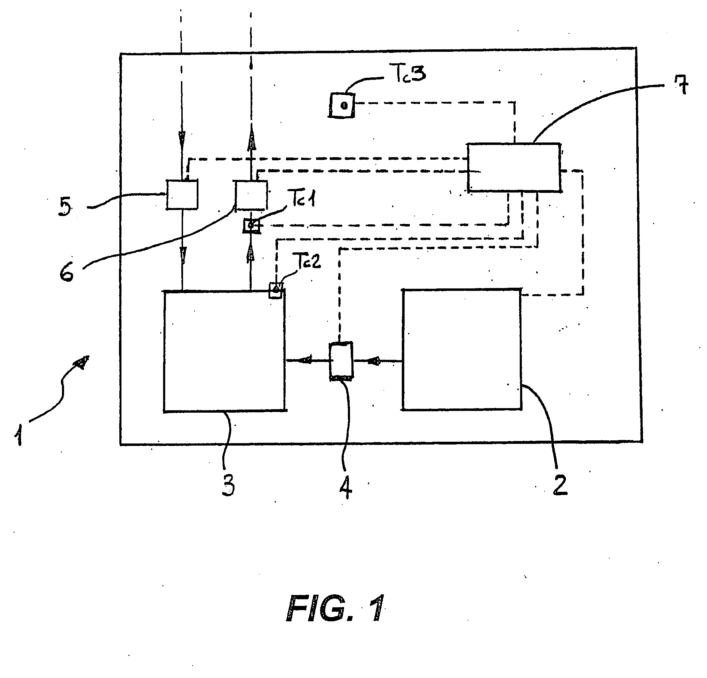

Figure 1 schematically shows the environment heating apparatus of the present invention.

### Detailed description of the invention

A detailed description of a preferred embodiment of the system for controlling and managing of an environment heating apparatus according to the present invention will now be given, by way of a non-limiting example and with reference to the sole attached figure.

According to the invention, a system for managing a heating apparatus 1 which typically comprises a fuel container 2 to be fed in an inner combustion chamber 3 by means of supplying means 4 is provided. Furthermore, fluid conveying means 5 for exchanging heat with said combustion chamber 3 are typically provided. Supplying/conveying means 5 constitute the means for exchanging heat from combustion chamber 3 with the outside and, according to the exchange fluid (air, water, or the like) may consist of fans/pumps/motors or the like.

Further, extraction/conveying means 6 of the combustion fumes from combustion chamber 3 to the outside also consisting of fans/motors or the like are provided.

Furthermore, according to the system for managing of the present invention, a temperature sensing is contemplated in three specific points of the apparatus.

More precisely, a first temperature sensor Tc1 consisting of a thermocouple or the like for the sensing of the temperature of the combustion fumes is provided and is fitted on the fume extraction conduit/pipe from the combustion chamber 3. Further, a second temperature sensor or thermocouple Tc2 is provided and arranged onto the external parts of said combustion chamber 3, for sensing the temperature reached in the combustion chamber 3. Furthermore, a third sensor or thermocouple Tc3 for sensing the room temperature in the surroundings of the apparatus 1 is provided.

The set of devices described hereto and the components of apparatus 1 are electrically connected to a data processing unit 7, said unit 7 being a microprocessor type or the like, which through a specific algorithm combines the values transmitted by the sensors Tc1, Tc2, Tc3, and consequently calculates the operation/function of the respective drives/devices (e.g. fuel supplying means 4, and/or heat exchange fluid supplying means 5, and/or hot fume extraction means 6). In this way, a combined and controlled management of the fuel loading into combustion chamber 3, of the introduction of comburent air into combustion chamber 3, and ejection of fumes produced within combustion chamber 3, as well as the convective heat exchange from the apparatus 1 to the surrounding environment to be heated, is obtained.

According to this system, a full control and efficiency maintenance of a combustion is achieved by the combined and continuous management of:
- metering of fuel dispensed to the combustion chamber 3;
- management and control of the fumes generated by combustion;
- amount of air introduced into combustion chamber 3 for the combustion itself; and
- heat convection process speed.

Furthermore, a typical parameters input/entry/setting panel (not shown in the figure) is provided on the body of apparatus 1, in order to interface and/or connect to the data processing unit 7. For example, by means of the aforementioned panel, the user may pre-set the required temperature to be reached in the environment.

A detailed description of the operating/function logic of the management and control system of the present invention applied to a heating apparatus will now be provided, by way of an illustrative and non-limiting example, and with reference to a solid fuel heater, such as for example a pellet heater, and realised according to the apparatus of the present invention. For the sake of clarity, same parts will have same numbers.

More precisely, a pellet heater was realised and having a tank 2 containing the pellets used as fuel, a pellet loading motor 4 for lading the latter into a combustion chamber 3, an electrical motor/fan 6 for expelling the exhaust fumes and an electrical motor/fan 5 for conveying heated air by convection of the same into the outer combustion chamber walls, and conveying the heated air to the environment to be heated (this function allows the cooling of the body of the heater itself).

The operation of the aforementioned motors 4, 5 and 6 is controlled by an electronic board 7 which realises the function logic according to the control system of the present invention as above described.

More precisely, the data processing unit/board 7 according to the control system of the present invention, calculates the following steps:

A first step in which sensors Tc1, Tc2 and Tc3 detect the actual state of the system and represented by the temperatures sensed by the three sensors. During this step, sensor Tc1 positioned on the fume exhaust will provide the exhaust fume temperature to data processing unit 7, sensor Tc2 positioned on the external wall of combustion chamber 3 will provide the temperature of the heater body, and sensor Tc3 positioned in the environment to be heated will provide the room temperature.

A second start-up step of the apparatus is then contemplated, this step consists in comparing the actual state with respect to the state/target to be reached, represented by the temperature to be reached in the environment to be heated, effectively controlling the heater in a safe manner and reaching this condition in a effective and efficient manner. More precisely, with the term "effective" is meant to function the heater in order to generate as much heat as possible in order to bring the environment temperature to the required temperature as quickly as possible, and with the term "efficient" is meant to reach the maximum combustion efficiency according to the kind of fuel used.

Later, a third step is contemplated which consists in managing and controlling the aforementioned motors of the heater (actions) by means of a specific operating controls. During operation, sensors Tc1, Tc2 and Tc3 will indicate respectively:
- the fume temperature as well as the combustion state;
- the temperature of the heater body and a safe operation thereof, avoiding overheating; and
- the environment temperature, compared to the temperature to be reached pre-set by the user, and the amount of heat to be generated.

The algorithm of said data processing unit 7, by combining these three values sensed by the aforementioned sensors Tc1, Tc2 and Tc3, will establish the actions to be implemented, i.e. will adjust the operation of the motors/devices of the pellet heater.

In the following tables two operating conditions are illustrated, in order to better describe the operating logic of the system and data processing unit 7 according to the present invention.

**Table 1**

| **State: heater just turned on** | | | | |
|---|---|---|---|---|
| **Variables (Tc sensors)** | **Temperature values recorded by sensors** | **Actions to the fuel loading motor** | **Actions to the convection motor** | **Actions to the fume exhaust motor** |
| Fume exhaust temperature (Tc1) | Low | A rapid load so as to supply the combustion | Low rate operating (no heat to be conveyed) | Medium rate operation so as to bring comburent air to the combustion chamber |
| Environment temperature Delta (i.e., temperature to be reached - current temperature of the environment) (Tc3) | High | | | |
| Heater body temperature (Tc2) | Low | | | |

**Table 2**

| **State: heater working at normal rate** | | | | |
|---|---|---|---|---|
| **Variables (Tc sensors)** | **Temperature values recorded by sensors** | **Actions to the fuel loading motor** | **Actions to the convection motor** | **Actions to the fume exhaust motor** |
| Fume exhaust temperature (Tc1) | According to values set as optimal | Increase or decrease the operation in small stepped values (so as to maintain the temperature of the exhaust fumes within a predetermined range of values) | Meter ventilation so as to maintain room temperature | Increase or decrease the operation in small stepped values (so as to maintain the temperature of the exhaust fumes within a predetermined range of values) |
| Room temperature Delta (Tc3) | Tending to zero | | | |
| Heater body temperature (Tc2) | Under the overheating threshold | | Manage cooling of the heater body to prevent overheat | |

According to the system for managing and controlling of the present invention, the sensed values related to exhaust temperature of the fumes and temperature of the heater body are considered as threshold/safety temperature values, therefore in case of excessively high values of one of these temperatures, the data processing unit 7 will enable the start of a safety procedure, which starts turning the heater off due to an operation considered as being faulty.

Furthermore, according to the operating logic of the system of the present invention, all the actions shown in the tables above are controlled by the algorithm of data processing unit 7 through a continuous temperature reading of sensors Tc1, Tc2 and Tc3, and the operation of the respective motors is performed within the minimum and maximum operation field predetermined by the product manufacturer and/or by the installer.

As apparent from the description of the management system and the tables provided above, according to the present invention, the user is no longer required to intervene on the management/control of the operation of the heating apparatus because such management is operated by the system in a fully automated manner.

Therefore, advantageously to the user is only required to set the desired temperature to be reached on a typical parameter entry/setting panel provided on the apparatus, and the former being interfaced/connected to said data processing unit 7 (not shown in the figure), while the operating times and methods will be managed fully autonomously and dynamically by the system, regardless of the type of fuel used, either solid, liquid or gaseous.

In this way, an entirely independent operation of the heating apparatus is obtained, with considerable increased safety, better efficiency, better energy use and lower pollution.

To the person skilled in the art it will be apparent that some components and parts of the apparatus and the management system according to the present invention may be realised differently from that above illustrated without departing from the scope of the annexed claims.

For example, the system for managing and controlling of the present invention is applicable for both environment heating and air conditioning apparatuses, which have operating similar to that above described and where the heat exchange to/from the environment to be conditioned may be carried out in one direction or in the opposite direction with respect to the apparatus and according to the system of the present invention.

Further, said data processing unit 7 may consist of any device capable of performing the required functions, such as for example a PLC, an EEPROM, a PC or the like. Furthermore, said data processing unit 7 may be arranged either on the apparatus 1 or in a remote housing with respect to the former. Similarly, said data processing unit 7 may be connected to the apparatus 1 either via electrical wiring or via wireless connection using suitable interfacing devices.

Furthermore, fuel supplying motor 4 may be replaced by an equivalent device with the same function, such as for example in the case of liquid fuel, motor 4 may consists of a valve or an injector.

On the other hand, for what concerns fume extraction 6, the same may be alternatively conveyed towards a heating and/or heat exchange system, such as for example in the case of fireplace boilers, without this altering the performance and/or the operation of the management system of the present invention.

## Claims

1. A system for controlling an environment heating apparatus (1), the apparatus comprising a solid fuel supply (2), a combustion chamber (3), means for feeding said solid fuel (4), means for supply/conveying (5) heat exchange fuel to said combustion chamber (3), and means for extracting/conveying (6) combustion fumes from said combustion chamber (3) to the outside, the system being **characterised in that** it further comprises first means (Tc1) for sensing the temperature of said fumes from said combustion chamber (3), second means (Tc2) for sensing the temperature in said combustion chamber (3), and third means (Tc3) for sensing the room temperature surrounding said apparatus (1), and **in that** it further comprises data processing means (7) co-operating with said first, second and third temperature sensing means (Tc1, Tc2, Tc3), and with said solid fuel feeding means (4), with said heat exchange supplying/conveying means (5), and with said extraction means (6).

2. A system for controlling an environment heating apparatus (1) according to the preceding claim, wherein said data processing means comprises a management and control unit (7) selected from the group comprising PLC, EEPROM, PC or the like.

3. A system for controlling an environment heating apparatus (1) according to claim 2 or 3, wherein said data processing unit (7) is arranged within said apparatus (1).

4. A management and control system of an environment heating apparatus (1) according to claim 1 or 2, in which said data processing unit (7) is arranged remotely with respect to said apparatus (1).

5. A method for controlling an environment heating apparatus (1) according to the preceding claims, **characterised in that** it comprises the following steps:
- periodically sensing the exhaust fume temperature with first temperature sensing means (Tc1) positioned on the fume exhaust;
- periodically sensing the combustion chamber temperature (3) with second temperature sensing means (Tc2) positioned on the walls of said combustion chamber (3);
- periodically sensing the room temperature with third sensing means (Tc3);
- comparing the detected temperature values of said first, second, and third sensing means (Tc1, Tc2, Tc3) to a pre-set room temperature value set by a user;
- actuating said supplying means (4) of said solid fuel, heat exchange fuel supplying/conveying means (5) and fume extraction/conveying means (6) to/from said combustion chamber (3); and
- continuously controlling said means (4, 5, 6) and continuously comparing the values detected by said first, second and third temperature sensing means (Tc1, Tc2, Tc3), respectively.

6. A method for controlling an environment heating apparatus (1) according to the preceding claim, wherein the continuous and automatic management of all steps is provided contemplated by means of a data processing unit (7).

7. A method for controlling an environment heating apparatus (1) according to claim 5 or 6, further comprising the step of maintaining the temperature of the exchange fumes within a predetermined value range by detecting the same by means of said temperature detection means (Tc1) and simultaneously controlling the operation of said fuel feeding means (4) and said hot fume extraction means (6).

8. A method for controlling an environment heating apparatus (1) according to the preceding claims from 5 to 7, further comprising the step of maintaining the combustion chamber (3) temperature within a range of values by sensing the same by means of said temperature sensing devices (Tc2) and simultaneously controlling said heat exchange fluid feeding/conveying means (5).

9. A method for controlling an environment heating apparatus (1) according to the preceding claims from 5 to 8, further comprising the step of maintaining the surrounding room temperature within a range of pre-set values by sensing the same by means of said sensing devices (Tc3) and simultaneously controlling said heat exchange fluid supplying/conveying means (5), said solid fuel supplying means (4) and said exhaust fume extraction means (6).

## Patentansprüche

1. System zum Steuern einer Umgebungsheizvorrichtung (1), wobei die Vorrichtung eine Festbrennstoffzufuhr (2), eine Verbrennungskammer (3), ein Mittel zum Zuführen des genannten Festbrennstoffs (4), ein Mittel zum Liefern/Befördern (5) von Wärmeaustauschbrennstoff zu der genannten Verbrennungskammer (3) und ein Mittel zum Entnehmen/Befördern (6) von Verbrennungsrauchgasen aus der genanntenVerbrennungskammer (3) nach außen umfasst, wobei das System **dadurch gekennzeichnet ist, dass** es ferner ein erstes Mittel (Tc1) zum Abtasten der Temperatur der genannten Rauchgase von der genannten Verbrennungskammer (3), ein zweites Mittel (Tc2) zum Abtasten der Temperatur in der genannten Verbrennungskammer (3) und ein drittes Mittel (Tc3) zum Abtasten der Raumtemperatur, die die genannte Vorrichtung (1) umgibt, umfasst, und dadurch, dass es ferner ein Datenverarbeitungsmittel (7) umfasst, das mit dem genannten ersten, zweiten und dritten Temperaturabtastmittel (Tc1, Tc2, Tc3) und mit dem genannten Festbrennstoff-Zuführungsmittel (4), mit dem genannten Wärmeaustausch-Lieferungs/Beförderungs-Mittel (5) und mit dem genannten Entnahmemittel (6) zusammenwirkt.

2. System zum Steuern einer Umgebungsheizvorrichtung (1) gemäß dem vorhergehenden Anspruch, wobei das genannte Datenverarbeitungsmittel eine Management-und Steuereinheit (7) umfasst, die aus der Gruppe ausgewählt ist, die PLC, EEPROM, PC oder dergleichen umfasst.

3. System zum Steuern einer Umgebungsheizvorrichtung (1) gemäß Anspruch 2 oder 3, bei dem die genannte Datenverarbeitungseinheit (7) innerhalb der genannten Vorrichtung (1) angeordnet ist.

4. Management-und Steuersystem einer Umgebungsheizvorrichtung (1) gemäß Anspruch 1 oder 2, in dem die genannte Datenverarbeitungseinheit (7) in Bezug auf die genannte Vorrichtung (1) fern angeordnet ist.

5. Verfahren zum Steuern einer Umgebungsheizvorrichtung (1) in Übereinstimmung mit den vorhergehenden Ansprüchen, **dadurch gekennzeichnet, dass** es die folgenden Schritte umfasst:
- periodisches Abtasten der Abgastemperatur mit dem ersten Temperaturabtastmittel (Tc1), das an dem Rauchgasauslass positioniert ist;
- periodisches Abtasten der Verbrennungskammertemperatur (3) mit dem zweiten Temperaturabtastmittel (Tc2), das an den Wänden der genannten Verbrennungskammer (3) positioniert ist;
- periodisches Abtasten der Raumtemperatur mit dem dritten Abtastmittel (Tc3);
- Vergleichen der erfassten Temperaturwerte des genannten ersten, zweiten und dritten Abtastmittels (Tc1, Tc2, Tc3) mit einem voreingestellten Raumtemperaturwert, der durch einen Nutzer eingestellt worden ist;
- Betätigen desgenanntenLiefermittels (4) desgenannten Festbrennstoffs, des Wärmeaustauschbrennstoff-Lieferungs/Beförderungs-Mittels (5) und des Rauchgas-Entnahme/Beförderungs-Mittels (6) zu/von der genannten Verbrennungskammer (3); und
- ununterbrochenes Steuern der genannten Mittel (4, 5, 6) und ununterbrochenes Vergleichen der in dieser Reihenfolge durch das erste, durch das zweite und durch das dritte genannte Temperaturabtastmittel (Tc1, Tc2, Tc3) erfassen Werte.

6. Verfahren zum Steuern einer Umgebungsheizvorrichtung (1) gemäß dem vorhergehenden Anspruch, wobei beabsichtigt ist, dass das ununterbrochene und automatische Management aller Schritte mittels einer Datenverarbeitungseinheit (7) bereitgestellt wird.

7. Verfahren zum Steuern einer Umgebungsheizvorrichtung (1) gemäß Anspruch 5 oder 6, das ferner den Schritt des Aufrechterhaltens der Temperatur der Austauschrauchgase innerhalb eines vorgegebenen Wertebereichs durch Erfassen derselben mittels des genannten Temperaturerfassungsmittels (Tc1) und des gleichzeitigen Steuerns des Betriebs des genannten Brennstoff-Zuführungsmittels (4) und des genannten Entnahmemittels (6) für heiße Rauchgase umfasst.

8. Verfahren zum Steuern einer Umgebungsheizvorrichtung (1) gemäß den vorhergehenden Ansprüchen von 5 bis 7, das ferner den Schritt des Aufrechterhaltens der Temperatur der Verbrennungskammer (3) innerhalb eines Bereichs von Werten durch Abtasten derselben mittels der genannten Temperaturabtastvorrichtungen (Tc2) und des gleichzeitigen Steuerns desgenannten Wärmeaustauschfluid-Lieferungs/Beförderungs-Mittels (5) umfasst.

9. Verfahren zum Steuern einer Umgebungsheizvorrichtung (1) gemäß den vorhergehenden Ansprüchen von 5 bis 8, das ferner den Schritt des Aufrechterhaltens der umgebenden Raumtemperatur innerhalb eines Bereichs voreingestellter Werte durch Abtasten derselben mittels der genannten Abtastvorrichtungen (Tc3) und des gleichzeitigen Steuerns des genannten Wärmeaustauschfluid-Lieferungs/Beförderungs-Mittels (5), des genannten Festbrennstoff-Liefermittels (4) und des genannten Abgasentnahmemittels (6) umfasst.

## Revendications

1. Système de commande d'un appareil de chauffage ambiant (1), l'appareil comprenant une alimentation en combustible solide (2), une chambre de combustion (3), un moyen pour l'amenée dudit combustible solide (4), un moyen pour l'amenée/le convoyage (5) d'un combustible d'échange de chaleur à ladite chambre de combustion (3) et un moyen pour extraire/convoyer (6) des fumées de combustion de ladite chambre de combustion (3) vers l'extérieur, le système étant **caractérisé en ce qu'**il comprend en outre des premiers moyens (Tc1) pour détecter la température desdites fumées de ladite chambre de combustion (3), des deuxièmes moyens (Tc2) pour détecter la température dans ladite chambre de combustion (3) et des troisièmes moyens (Tc3) pour détecter la température ambiante entourant ledit appareil (1), et **en ce qu'**il comprend en outre des moyens de traitement de données (7) coopérant avec lesdits premier, deuxième et troisième moyens de détection de température (Tc1, Tc2, Tc3) et avec ledit moyen d'amenée de combustible solide (4), avec ledit moyen d'amenée/de convoyage d'échange de chaleur (5) et avec ledit moyen d'extraction (6).

2. Système de commande d'un appareil de chauffage ambiant (1) selon la revendication précédente, dans lequel ledit moyen de traitement de données comprend une unité de gestion et de commande (7) sélectionnée dans le groupe comprenant PLC, EEPROM, PC ou analogue.

3. Système de commande d'un appareil de chauffage ambiant (1) selon la revendication 2 ou 3, dans lequel ladite unité de traitement de données (7) est agencée dans ledit appareil (1).

4. Système de gestion et de commande d'un appareil de chauffage ambiant (1) selon la revendication 1 ou 2, dans lequel ladite unité de traitement de données (7) est agencée à distance par rapport audit appareil (1).

5. Procédé de commande d'un appareil de chauffage ambiant (1) selon les revendications précédentes, **caractérisé en ce qu'**il comprend les étapes suivantes:
- détecter périodiquement la température des fumées d'échappement avec les premiers moyens de détection de température (Tc1) positionnés sur l'échappement des fumées;
- détecter périodiquement la température de la chambre de combustion (3) avec les deuxièmes moyens de détection de température (Tc2) positionnés sur les parois de ladite chambre de combustion (3);
- détecter périodiquement la température ambiante avec les troisièmes moyens de détection (Tc3);
- comparer les valeurs de température détectées desdits premiers, deuxièmes et troisièmes moyens de détection (Tc1, Tc2, Tc3) avec une valeur de température de pièce préréglée, réglée par un utilisateur;
- actionner lesdits moyens d'amenée (4) dudit combustible solide, du moyen d'amenée/de convoyage de combustible d'échange de chaleur (5) et du moyen d'extraction/convoyage de fumées (6) vers/de ladite chambre de combustion (3); et
- commander continuellement lesdits moyens (4, 5, 6) et comparer continuellement les valeurs détectées par lesdits premier, deuxième et troisième moyens de détection de température (Tc1, Tc2, Tc3), respectivement.

6. Procédé de commande d'un appareil de chauffage ambiant (1) selon la revendication précédente, dans lequel la gestion continue et automatique de toutes les étapes est réalisée en étant surveillée par une unité de traitement de données (7).

7. Procédé de commande d'un appareil de chauffage ambiant (1) selon la revendication 5 ou 6, comprenant en outre l'étape consistant à maintenir la température des fumées d'échappement dans une plage de valeur prédéterminée en détectant celle-ci par lesdits moyens de détection de température (Tc1) et commander simultanément le fonctionnement dudit moyen d'amenée de combustible (4) et dudit moyen d'extraction de fumées chaudes (6).

8. Procédé de commande d'un appareil de chauffage ambiant (1) selon les revendications précédentes 5 à 7, comprenant en outre l'étape consistant à maintenir la température de la chambre de combustion (3) dans une plage de valeurs en détectant celle-ci par lesdits dispositifs de détection de température (Tc2) et commander simultanément ledit moyen d'amenée/de convoyage de fluide d'échange de chaleur (5).

9. Procédé de commande d'un appareil de chauffage ambiant (1) selon les revendications précédentes 5 à 8, comprenant en outre l'étape consistant à maintenir la température de pièce ambiante dans une plage de valeurs préréglées en détectant celle-ci par lesdits dispositifs de détection (Tc3) et commander simultanément ledit moyen d'amenée/de convoyage de fluide d'échange de chaleur (5), ledit moyen d'amenée de combustible solide (4) et ledit moyen d'extraction de fumées d'échappement (6).
